(19) Europäisches Patentamt
European Patent Office
Office européen des brevets

(11) Numéro de publication: **0 202 170**
**B1**

(12) **FASCICULE DE BREVET EUROPEEN**

(45) Date de publication du fascicule du brevet: **18.04.90**

(51) Int. Cl.$^5$: **C 08 G 77/62**, C 08 L 83/16

(21) Numéro de dépôt: **86420088.6**

(22) Date de dépôt: **27.03.86**

(54) **Composition polysilazane pouvant réticuler en présence d'un métal ou d'un composé métallique catalysant la réaction d'hydrosilylation.**

(30) Priorité: **29.03.85 FR 8504759**

(43) Date de publication de la demande:
**20.11.86 Bulletin 86/47**

(45) Mention de la délivrance du brevet:
**18.04.90 Bulletin 90/16**

(84) Etats contractants désignés:
**AT BE CH DE FR GB IT LI LU NL SE**

(56) Documents cités:
**US-A-4 398 010**
**US-A-4 404 153**

**CHEMICAL ABSTRACTS, vol. 83, no. 12, 22 septembre 1975, page 16, réf. no. 98177z, Columbus, Ohio, US; & SU - A - 472 952 (LOMONOSOV, M.V., INSTITUTE OF FINE CHEMICAL TECHNOLOGY, MOSCOW) 05-06-1975**

**POLYMER SCIENCE U.S.S.R., vol. 21, no. 4, janvier 1980, pages 996-1003, Pergamon Press Ltd., PL; K.A. ANDRIANOV et al.: "Study of the polyaddition reaction of 1,3-bis-(dimethylsilyl) tetramethylcyclodisilazane to unsaturated compounds"**

(73) Titulaire: **RHONE-POULENC CHIMIE**
**25, quai Paul Doumer**
**F-92408 Courbevoie Cédex (FR)**

(72) Inventeur: **Lebrun, Jean-Jacques**
**24, rue Pierre Brunier**
**F-69300 Caluire (FR)**
Inventeur: **Porte, Hugues**
**65, rue de Sèze**
**F-69006 Lyon (FR)**

(74) Mandataire: **Seugnet, Jean Louis et al**
**RHONE-POULENC CHIMIE Service Brevets**
**Chimie Centre de Recherches des Carrières B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 202 170 B1

Courier Press, Leamington Spa, England.

**Description**

La présente invention concerne une composition polysilazane pouvant réticuler par réaction d'hydrosilylation en présence d'un métal ou d'un composé métallique catalysant la réaction d'hydrosilylation.

Les organopolysilazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélanges. Pour fabriquer du nitrure de silicium, il existe une autre voie qui consiste à faire réagir à haute température et en phase vapeur des chlorosilanes ($SiCl_4$, $HSiCl_3$ et $H_2SiCl_2$) sur l'ammoniac. Selon cette méthode aboutissant directement à un produit en poudre, il est difficile de fabriquer des objets en forme, en particulier, de fibres. Par contre, les polysilazanes peuvent être également filés en fibres continues dont la pyrolyse aboutit à des fibres céramiques.

Ils peuvent être mis sous forme de pellicules plus ou moins minces, de pièces massives moulées, et être utilisés comme liant pour fibre céramique ou fibre de carbone et comme liant de frittage pour pièces céramiques poreuses.

Il existe toutefois des difficultés pour mettre en forme de façon aisée et économique ces polysilazanes sous forme de fibres ou de revêtements qui, après pyrolyse, donnent des produits céramiques sous forme de fibre, de pellicules, de revêtements plus ou moins minces et de pièces moulées.

Dans le brevet américain US.A 3.853.567 on a essayé de donner une première solution au problème ci-dessus.

Selon ce brevet on propose un procédé de fabrication de pièces en forme telles que des fibres comportant du carbure de silicium, du nitrure de silicium ou leurs mélanges avec d'autres produits céramiques, en effectuant un premier traitement thermique à une température comprise entre 200°C et 800°C d'un polysilazane, en vue d'obtenir une résine carbosilazane fusible qui peut être filée à l'état fondu puis pyrolysée à une température comprise entre 800 et 2000°C.

Le brevet ci-dessus constitue certes un progrès important mais il présente le double inconvénient de nécessiter un premier traitement thermique à une température pouvant être déjà très élevée (200—800°C) et de travailler un carbosilazane à l'état fondu sous des conditions anhydrides et en atmosphère inerte. De plus, le rendement pondéral en céramique peut être insuffisant.

La présente invention a pour but de résoudre le problème ci-dessus et de proposer un moyen simple, efficace, économique et de mise en oeuvre aisée pour mettre en forme sous des formes les plus diverses (fils, articles moulés, revêtements, pellicules etc.) des polysilazanes qui, lors de leur pyrolyse, à une température comprise entre 1000 et 2000°C donnent des produits céramiques présentant d'excellentes propriétés.

Il est en outre souhaitable et c'est un autre but de la présente invention de pouvoir disposer facilement d'un polysilazane qui soit assez stable à l'hydrolyse et qui conduise par pyrolyse avec un rendement pondéral élevé, à un matériau céramique. Il est nécessaire pour cela que le polysilazane présente lors de la pyrolyse une bonne tenue thermique tout en demeurant solidaire du support à revêtir et à imprégner.

Ces buts et d'autres sont atteints par la présente invention qui concerne en effet une composition polysilazane pouvant réticuler à la température ambiante ou sous l'effet de la chaleur et comprenant:

—au moins un polysilazane (1) contenant au moins 3 groupes ≡SiH par molécule, et au moins 2 groupes $SiR_2$ par molécule, $R_2$ étant un radical hydrocarboné insaturé et une quantité catalytiquement efficace d'un métal ou d'un composé métallique catalysant la réaction d'hydrosilylation ≡SiH/≡$SiR_2$.

De préférence la composition polysilazane comporte:

—au moins un polysilazane (1) présentant, par molécule au moins 3 motifs (choisis parmi les motifs de formule (I)a, (I)b et (I)c:

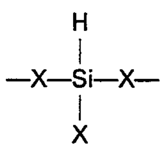 (Ia) 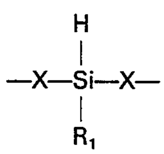 (Ib) 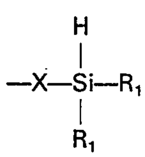 (Ic)

dans lesquelles les radicaux $R_1$ identiques ou différents, sont choisis parmi un atome d'hydrogène, un radical hydrocarboné saturé et un radical aryle, alkylaryle ou arylalkyle;

—et au moins 2 motifs choisis parmi les motifs de formule (II)a, (II)b et (II)c:

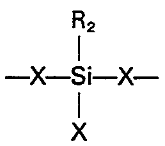 (IIa) 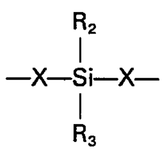 (IIb) 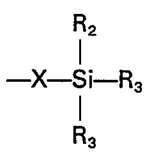 (IIc)

dans lesquelles $R_2$ représente un radical hydrocarboné à insaturation alcénique ou alcynique et les radicaux $R_3$, identiques ou différents, représentent un radical pouvant être un radical $R_1$, c'est-à-dire un radical hydrocarboné saturé ou un radical aryle, alkylaryle ou arylalkyle, pouvant être un radical $R_2$, mais $R_3$ est différent de l'atome d'hydrogène, les symboles X identiques ou différents représentent les chainons $(CH_2)_n$ (avec n étant nombre entier compris entre 1 et 8), —Si— et N—, au moins 50% des X étant N—; et

—une quantité catalytiquement efficace d'un métal ou d'un composé métallique catalysant la réaction d'hydrosilylation.

Selon un mode préféré de mise en oeuvre de l'invention, à la place ou en plus du seul polysilazane (1) on peut utiliser un mélange de polysilazanes comportant:

—au moins un polysilazane (2) présentant par molécule au moins (2) de préférence au moins (3) motifs choisis parmi les motifs de formule (Ia), (Ib) et (Ic) ci-dessus et:

—au moins un polysilazane (3) présentant par molécule au moins deux motifs choisis parmi les motifs de formule (IIa), (IIb) et (IIc) ci-dessus:

Dans les polysilazanes (1), (2) et (3), les motifs autres que (Ia), (Ib), (Ic) ou (IIa), (IIb), (IIc) peuvent être des motifs choisis parmi les motifs de formules:

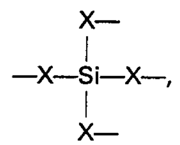
(IIIa)

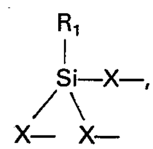
(IIIb)

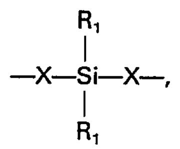
(IIIc)

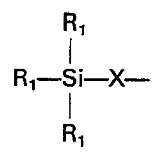
(IIId)

dans lesquelles les radicaux $R_1$ et les chainons X identiques ou différents ont la signification ci-dessus.

Dans les formules (Ib) et (Ic), (IIIb), (IIIc) et (IIId), le radical $R_1$ peut être un radical hydrocarboné aliphatique saturé, de préférence ayant de 1 à 8 atomes de carbone, comme un radical méthyle, éthyle, propyle, butyle, pentyle, hexyle, heptyle et octyle; le radical $R_1$ peut être également un radical hydrocarboné cyclique saturé ayant de 3 à 7 atomes de carbone comme le radical cyclopropyle, cyclobutyle, cyclopentyle, cyclohexyle et cycloheptyle; $R_1$ peut être un radical arylalkyle comme les radicaux benzyle et phényléthyle, ou un radical alkylaryle comme les radicaux tolyle et xylyle. Les radicaux méthyle et phényle sont les radicaux préférés. Dans les formules (IIa), (IIb) et (IIc), le radical $R_2$ peut être un radical aliphatiquement insaturé ayant de préférence de 2 à 8 atomes de carbone on peut citer les radicaux, éthynyle, propynyle etc. les radicaux vinyle, allyle etc. et les radicaux cycloalcényle, comme les cyclopentényle, cyclohexényle, cycloheptényle et cyclooctényle. Le radical vinyle est le radical préféré.

Comme exemple de radicaux $R_3$, dans les formules (IIb) et (IIc), on peut citer les exemples donnés pour $R_1$ et $R_2$ ci-dessus, avec la condition supplémentaire que $R_1$ est différent de l'atome d'hydrogène. De préférence X est choisi parmi N— et —S—.

Les polysilazanes de formule (1), (2) et (3) ci-dessus sont des produits bien connus décrits en détail dans la littérature.

Ils peuvent être obtenus comme produit de réaction d'un organohalogénomonosilane de formule:

$$R_aY_{4-a}Si$$

dans laquelle Y est un halogène qui est généralement l'atome de chlore et le ou les radicaux R identiques ou différents peuvent avoir la définition de $R_1$, $R_2$ ou $R_3$ ci-dessus, sur un composé organique ou organosilylé comportant au moins un groupement $NH_2$ ou NH comme par exemple l'ammoniac, les amines primaires ou secondaires, les silylamines, les amides, les hydrazines, les hydrazides etc.

Comme organohalogénosilane utilisable seul ou un mélange on peut citer:

$(CH_3)_2SiCl_2$, $(CH_3)_3SiCl$, $CH_3SiCl_3$, $SiCl_4$,
$(CH_3)_2Si(CH_2Cl)_2$, $(CH_3)_3SiCH_2Cl$, $CH_3Si(CH_2Cl)_3$,
$(C_6H_5)_2SiCl_2$, $(C_6H_5)(CH_3)SiCl_2$, $C_6H_5SiCl_3$
$(CH_3)(CH_3CH_2)SiCl_2$, $CH_3HSiCl_2$, $H_2SiCl_2$,
$(CH_3)_2HSiCl$, $HSiCl_3$, $CH_3(CH_2{=}CH)SiCl_2$,
$(CH_3)_2(CH_2{=}CH)SiCl$

Comme exemples de composés comportant au moins un groupement $NH_2$ ou NH et utilisables pour la synthèse des polysilazanes ci-dessus, on peut citer: l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les polysilazanes utilisables dans le cadre de la présente invention englobent également les organopoly(disilyl)silazanes qui peuvent être préparés par action (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc. sur (b) au moins un organohalogénodisilane de formule:

$$R_bX_{3-b}SiSiR_cX_{3-c} \qquad (V)$$

dans laquelle les radicaux R identiques ou différentes ont la même signification que ci-dessus et b est égal à 0, 1, 2 ou 3 et c est égal à 0, 1 ou 2 et X est un halogène, généralement, le chlore.

Comme exemple de composés de formule (V) on peut citer:
$(CH_3)_2ClSiSi(CH_3)_2Cl$, $(CH_3)_2ClSiSiCH_3Cl_2$, $CH_3Cl_2SiSiCH_3Cl_2$.

Comme exemples de composés comportant au moins un groupement $NH_2$ ou NH et utilisable pour la synthèse des poly(disilyl)silazanes ci-dessus, on peut citer les mêmes composés que ceux cités ci-dessus pour l'aminolyse des organohalogénomonosilane.

Les polysilazanes (1), (2) et (3) sont bien connus et aisés à préparer. Ils englobent plus spécifiquement:

—les polymères linéaires répondant aux formules:

$$H_2N(R_2SiNH)_pSiR_2NH_2 \qquad (a)$$

et

$$R_3SiNH(R_2SiNH)_{p'}SiR_3 \qquad (b)$$

dans lesquelles R a la signification de $R_1$, de $R_2$ ou de $R_3$ ci-dessus; p et p' sont des nombres entiers pouvant être compris entre 1 et 1000 généralement entre 3 et 30.

Les polymères de formule (a) peuvent être préparés par mise en contact de diorganodichlorosilanes avec de l'ammoniac, et ceux de formule (b) par réaction d'ammoniac sur un triorganochlorosilane ou un mélange de diorganodichlorosilane et de triorganochlorosilane (voir BF A. 1.086.932, brevet américain US—A 2.564.675).

De façon générale, la réaction d'organohalogénosilane sur une organoamine est décrite dans les brevets américains US—A 3.853.567 et 3.892.583 et la réaction d'organohalogénosilane sur un disilazane est décrite dans la brevet belge BE—A 888.787.

—les polymères cycliques répondant à la formule:

$$(R_2SiNH)_n$$

dans laquelle n est compris entre 3 et 10, généralement n=3,4 et R a la signification donnée ci-dessus sont décrits notamment dans le brevet britannique GB—A 881.178.

—les polymères résineux formés de motifs choisis parmi ceux de formule $R_3SiNH_{0,5}$, $R_2SiNH$, $RSiNH_{1,5}$, $Si(NH)_2R$ ayant la signification donnée ci-dessus qui sont avantageusement préparés par mise en contact des organochlorosilanes correspondant ou des mélanges de ces silanes avec de l'ammoniac, éventuellement en milieu solvant organique (voir brevets français FR—A 1.379.243, 1.392.853 et 1.393.728).

Ces polysilazanes résineux renferment en quantité prépondérante des liaisons Si—NH—Si et en quantité moindre des liaisons $SiNH_2$ ou $N(Si—)_3$ et comportent parfois en dehors des polymères réticulés, des polymères linéaires ou cycliques; ces derniers ne pouvant se former qui si, parmi les organochlorosilanes de départ se trouvent principalement des diorganodichlorosilanes.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Plus particulièrement les polysilazanes (1) présentant à la fois des motifs de formule (Ib) et (IIb) peuvent être formés par coammonolyse des silanes suivants: $CH_3SiCl_3$, $(CH_3)_2SiCl_2$, $CH_3(CH_2{=}CH)SiCl_2$ et $CH_3HSiCl_2$.

Comme polysilazane (2) présentant des motifs de formule (Ib) et dans laquelle $R_1$=H on peut utiliser les polysilazanes cycliques ou linéaires de formule:

$$—(H_2SiNH)_n—$$

dont la préparation est décrite en détail dans le brevet américain US—A 4.397.828.

Comme polysilazane cyclique ou linéaire (2) présentant des motifs de formule (Ib) dans laquelle $R_1$ est différent d'un atome d'hydrogène, on peut utiliser les polysilazanes de formule:

$$—(R_1SiHNH)_n—$$

dont la préparation par ammonolyse de $R_1SiHCl_2$ est décrite en détail par S. D. Brower et C. P. Haber, I. Amer, Chem. Soc. 1948, *70*, 3888.91, K. A. Andrianov et al., *Dokl, Akad. Nauk SSSR* 1967, *176* 85 et dans le brevet britannique 881.178.

Dans les formules ci-dessus, n est un nombre supérieur ou égal à 3 et est généralement compris entre 3 et 200.

Les polysilazanes (2) présentant des motifs de formule (Ib) dans laquelle $R_1$ est différent de H peuvent être des copolymères préparés par coammonolyse de $R_1SiHCl_2$ avec au moins un autre silane choisi parmi $R'SiCl_3$ et $R''R'''SiCl_2$ dans lesquels les radicaux R', R'' et R''' identiques ou différents représentent un radical organique hydrocarboné analogue à $R_1$.

Les polysilazanes (3) présentant des motifs de formule (IIb) peuvent être préparés par ammonolyse de $Cl_2R_2SiR_3$ ou par coammonolyse de ce silane avec au moins un autre silane choisi parmi $R'SiCl_3$, $R''R'''SiCl_2$ comme définis ci-dessus, ou bien des disilanes chlorés selon des méthodes bien connues, comme par exemple décrites dans le Journal of Polymer Science A *2* 3179 (1964) et par Redl, Silazane Polymer, Arpa-19, Advanced Research Projects Agency, Octobre 1965, dans les brevets US 3.853.567 et 3.892.583, dans le brevet européen 75826 et dans le brevet français 2.497.812.

On peut utiliser comme catalyseur tout métal ou composé métallique incluant les complexes métalliques qui favorise efficacement l'addition des groupes $\equiv SiH$ au groupe $\equiv SiR_2$.

On connait une grande diversité de tels catalyseurs qui comprennent certains composés carbonylés du fer, du nickel et du cobalt.

Le catalyseur est de préference un métal du groupe du platine (platine iridium, rhodium, ruthénium, osmium et paladium) introduit dans la composition sous forme d'une poudre fine métallique ou de préférence sous forme d'un complexe à la dose de 1 à 400 ppm, de préférence de 10 à 250 ppm calculés en poids de métal catalytique.

On peut utiliser comme catalyseur des complexes d'un métal du groupe du platine, notamment les complexes de platine-oléfine comme décrit dans les brevets US 3.159.601 et 3.159.662, les produits de réaction des dérivés du platine avec des alcools des aldéhydes et des éthers décrits dans le brevet US 3.220.972, les catalyseurs platine-vinylsiloxane décrits dans les brevets français 1.313.846 et son addition 88 676 et le brevet français 1.480.409 ainsi que les complexes décrits dans les brevets US 3.715.334. 3.775.452 et 3.814.730, un catalyseur au rhodium tel que décrit dans les brevets US 3.296.291 et 3.928.629.

Les métaux préférés du groupe du platine sont le platine et le rhodium; le ruthénium moins cher, est également utilisable.

Dans les compositions polysilazanes selon l'invention le rapport molaire $SiH/SiR_2$ est généralement supérieur à 0,5 et inférieur à 5 et est de préférence compris entre 0,8 et 2.

Dans l'application revêtement, pellicules, couches minces, la composition est de préférence utilisée sans solvant. Dans ce cas, les polysilazanes (1), (2) et (3) sont choisis de telle sorte que la viscosité de la composition à 25°C soit comprise entre 10 et 5000 mPa · s, de préférence entre 100 et 1000 mPa · s.

Des viscosités supérieures peuvent être utilisées, mais il est alors nécessaire quand on veut utiliser les compositions pour enduire ou imprégner un support, de solubiliser la composition dans un solvant organique compatible avec les polysilazanes comme le benzène, le toluène, l'hexane, le cyclohexane, l'éther isopropylique, l'éther éthylique, le dichlorométhane et le chlorobenzène.

Dans l'application fibres on doit utiliser des viscosités supérieures à 5000 mPa · s. On peut opérer sans solvent à l'état fondu ou en solution, la réticulation s'effectuant à la sortie de la filière par passage dans un four et/ou sous rayonnement (UV, faisceaux d'électron).

Les compositions polysilazanes selon l'invention peuvent contenir en outre des charges de préférence choisies parmi $SiO_2$, $Si_3N_4$, SiC, BN, $B_2O_3$, $B_4C$, AlN, $Al_2O_3$, $Al_4C_3$, TiN, $TiO_2$, TiC, $Z_rO_2$, $Z_rC$, $VO_2$ etc.

La composition polysilazane selon l'invention peut en outre servir de matrice pour des fibres céramiques réalisées notamment en SiC, $SiO_2$, $Si_3N_4$, $B_4C$ etc.

La composition polysilazane selon l'invention est particulièrement utile pour revêtir ou imprégner des supports rigides ou souples en métal ou en fibres céramiques.

Certaines compositions revêtant ou imprégnant ces supports peuvent réticuler à température ambiante.

Toutefois, en général pour réticuler les compositions polysilazanes selon l'invention il est préférable de soumettre lesdites compositions à un traitement thermique de préférence sous vide ou sous pression ou sous atmosphère inerte compris entre 50 et 300°C de préférence entre 100 et 200°C durant un temps compris entre 1 minute et 24 heures. Cette réticulation peut être accélérée par utilisation d'un rayonnement U.V. ou d'un faisceau d'électrons. Il est cependant possible de réticuler les polysilazanes à l'atmosphère ambiante et également de conserver les réticulats obtenus à l'atmosphère ambiante. On a en effet pu mettre en évidence que ces réticulats présentaient une résistance tout à fait inattendue aux réactions de dégradation provoquées par l'oxygène et l'humidité de l'air.

De façon à accélérer la réticulation de la composition, on peut également rajouter à la composition un générateur de radicaux libres de préférence ne contenant pas d'oxygène, à une teneur comprise entre 0,01 et 20 parties pour 100 parties de composition.

L'azobisisobutyronitrile de formule:

$$CN(CH_3)_2C—N=N—C(CH_3)_2CN$$

convient plus particulièrement.

Les supports recouverts ou imprégnés de la composition durcie, ou les fibres, peuvent subir immédiatement ou ultérieurement un traitement de pyrolyse de préférence sous vide ou sous pression ou sous atmosphère inerte avec une montée en température allant de la température de réticulation à 1500—2000°C, suivant la nature de la céramique ou du liant désirée.

La composition selon l'invention et le procédé de réticulation de cette composition permettent donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramique et des liants de frittage.

Dans les exemples suivants, illustrant l'invention sans en limiter la portée, on analyse les polysilazanes obtenus traités catalytiquement ou non, par thermogramométrie dynamique (TGA) en les pyrolysant de la température ambiante (20°C) à 1400°C sous azote avec une vitesse de montée en température de 2°C/min. On indique dans les exemples le rendement TGA (% en poids de résidu solide à 1300—1500°C).

Les propriétés mécaniques des compositions réticulées sont appréciées par la variation de la rigidité relative RR en fonction de la température. Cette variation est illustrée par les figures 1 et 2 du dessin annexé et est établie par la méthode du pendule de torsion à fibres.

La viscosité est mesurée à 25°C et est donnée en mPa · s. De plus dans les formules Me=$CH_3$, Vi=$CH_2$=CH, les réactions d'ammonolyse et de coammonolyse sont effectuées dans un premier réacteur I de 3 litres de forme cylindrique (muni d'une double enveloppe pour refroidir le volume réactionnel). Le réacteur est surmonté d'un condenseur de gaz. L'agitation mécanique est assurée par deux turbines Rushton® (une turbine à pales droites, une turbine à pales inclinées) disposées le long de l'arbre d'agitation. L'introduction de gaz $N_2$ et $NH_3$ se fait pas l'intermédiaire d'un tube fin plongeant dans la solution de façon à faire apparaitre $NH_3$ juste sous la lère turbine d'agitation. En fin d'ammonolyse le mélange réactionnel est soutiré et est introduit dans un 2ème réacteur II muni d'une agitation mécanique (turbine Rushton® à pales droites) et d'un lit filtrant (porosité moyenne 10 µm). Les ammonolysats sont filtrés et les solvants de rinçage sont introduits dans un troisième réacteur III de 6 litres muni d'une double enveloppe et d'une agitation mécanique, d'une turbine de Rushton® à pales droites, et est inerté sous $N_2$ ou mis sous vide 25 mbar. A la sortie du réacteur III la solution contenant l'ammonolysat est introduite dans un évaporateur rotatif.

L'ensemble de l'installation est mise sous atmosphère inerte plusieurs heures avant la manipulation. L'ensemble de la réaction, ammonolyse, filtration, évaporation du solvant se fait sous azote sec. Les produits obtenus sont placés dans des flacons étanches inertés à l'azote et sont conservés, pesés, manipulés sous boîte à gants inertée à l'azote.

Le dosage chimique des fonctions SiH est effectué par action de la potasse butanolique à 5% en poids. Il se dégage une quantité d'hydrogène mesurée par gazométrie proportionnelle à la quantité de SiH présente dans l'échantillon. Par comparaison un échantillon de $D_3N$ (héxaméthylcyclotrisilazane) ne comportant pas de motif SiH, ne produit pas de dégagement d'hydrogène dans l'intervalle de temps et de température nécessaires à la mesure (20°C pendant 15 minutes). Ceci prouve que la potasse ne réagit pas avec les hydrogènes liés à l'azote. Les résultats de la méthode chimique simple d'emploi sont en accord avec les résultats des méthodes spectrales semi-quantitatives (RMN 1H, RMN$^{29}$Si et I.R.).

Par ailleurs dans les exemples suivants on appelle:

DN= 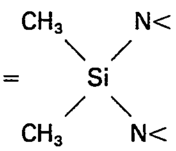 $D^{NVi}$= 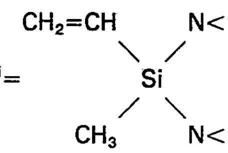 D'N= 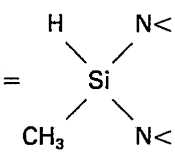

Dans ce qui suit, sauf mentions contraires, les pourcentages indiqués sont en poids.

Exemple 1

207,5 g de $CH_3HSiCl_2$ (1,8 mole) de pureté >99% sont placés dans le réacteur I en présence de 1,2 litre d'éther isopropylique. On introduit l'ammoniac dans le réacteur I avec un débit de 6 $cm^3$/s additionné de $N_2$ avec un débit de 3 $cm^3$/s pendant 7 H 30 (soit environ 7 moles de $NH_3$ introduits). La température du réacteur I est maintenue à 2°C pendant l'introduction de $NH_3$ (6 heures) et est portée à 20°C toujours avec introduction de $NH_3$ pendant 1 h 30. Le chlorure d'ammonium éliminé est séché sous vide et pesé (188 g pour un poids théorique de 192,6 g).

Après élimination du solvant sous vide (25 mbar à 60°C puis 1,5 mbar à 60°C pendant 1 heure), on récupère 84 g d'un liquide limpide peu visqueux. Le rendement pondéral de la réaction est de 79%.

Les solvants récupérés sont analysés par chromatographie en phase gazeuse pour identifier en quantifier le taux de volatils éliminés lors de la dévolatilisation du produit.

Le produit lui même est analysé par IR, RMN du $^{29}$Si et RMN du proton $^1$H.RMN 360 MHz $C_6D_6$: δ=0,1—0,4 ppm (large: $SiCH_3$) δ=0,6 à 1,5 ppm (large: NH) δ=4,1 ppm (large: SiH) δ=4,5—4,7 ppm (large: SiH) δ=4,8—5,0 ppm (large: SiH).

L'analyse par chromatographie liquide indique la présence de plusieurs produits de faibles masses moléculaires évaluées entre 300 et 450 g/mole.

Le dosage chimique du produit indique une teneur en hydrogène du produit=1,66% (1,70% théorique). Ce résultat est en accord avec les indications données par les méthodes spectrales.

Exemple 2

203 g de $MeViSiCl_2$ (1,44 mole) de pureté >99% dans 1,3 litres d'éther isopropylique sont ammonolysés suivant le procédé décrit à l'exemple 1. Le débit de $NH_3$ est de 6 $cm^3/s$, la réaction dure 6 H 30 à 2°C (soit 6,1 mole de $NH_3$ engagé). On récupère 119 g de silazane, huile limpide de viscosité 3 mPa · s. Le rendement pondéral de la réaction est de 97%.

Le produit a été analysé par IR, RMN du proton, RMN du $^{29}Si$ et chromatographique en phase gazeuse. Il est constitué principalement de deux produits cycliques:

$D_3^{NVi}$ = 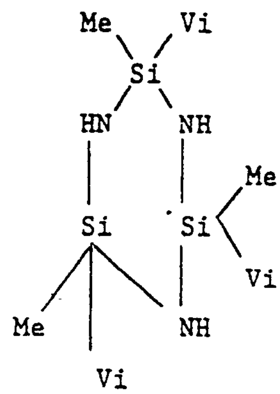 89 % molaire

et $D_4^{NVi}$ : 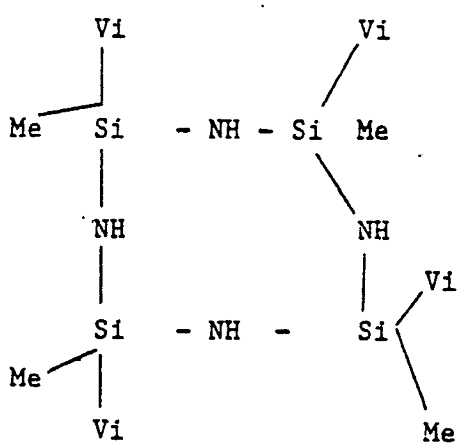 11 % molaire

$Vi = CH_2{=}CH$ ; $Me = CH_3$

Exemple 3

On effectue la coammonolyse suivant le procédé de l'exemple 1 de:

—107,2 g de $CH_3SiCl_3$ (0,72 mole)

—46,25 g de $(CH_3)_2SiCl_2$ (0,36 mole)

—41,4 g de $CH_3HSiCl_2$ (0,36 mole)

en milieu solvant éther isopropylique (1,3 litre). La réaction s'effectue à 2°C avec un débit de $NH_3$ de 6 $cm^3/s$ pendant 7 heures (soit 6,6 moles de $NH_3$ engagés).

On récupère 81,3 g d'un liquide visqueux de viscosité 1100 mPa · s. Le rendement pondéral de la coammonolyse est de 86,2%.

Dosage chimique des SiH=0,37% (0,38% théorique).

Exemple 4

On effectue la coammonolyse suivant le procédé de l'exemple 1, de:

—107,2 g de $CH_3SiCl_3$ (0,72 mole)

—46,25 g de $(CH_3)_2SiCl_2$ (0,36 mole)

—50,76 g de $CH_3(CH_2{=}CH)SiCl_2$ (0,36 mole)

On opère en présence de 1,3 litre d'éther isopropylique. La réaction s'effectue à 2°C avec un débit de $NH_3$=6 cm$^3$/s pendant 6 H 45. On récupère 98,7 g d'une huile visqueuse de viscosité 110 mPa · s, soit un rendement pondéral de la coammonolyse de 95%.

Le produit a été identifié par RMN du $^{29}$Si, RMN du proton et IR. Sa composition correspond bien à celle des produits engagés $T^N/D^N=1$ et $D^{NVi}/D^N=1$.

Exemple 5

On effectue la coammonolyse suivant le procédé de l'exemple 1 de:

—96,9 g de $CH_3SiCl_3$ (0,65 mole)

—46,5 g de $(CH_3)_2SiCl_2$ (0,36 mole)

—20,3 g de $CH_3(CH_2{=}CH)SiCl_2$ (0,144 mole)

—33,1 g de $CH_3HSiCl_2$ (0,288 mole)

La réaction est menée à 3°C dans 1,2 litre d'éther isopropylique. Le débit de $NH_3$ est de 6 cm$^3$/s et l'introduction d'ammoniac dure 7 heures. On récupère 88,2 g d'un produit visqueux de viscosité 150 mPa · s, soit un rendement pondéral de 90%. Dosage chimique des SiH: 0,288% (0,294% théorique).

Exemples 6 à 10

Dans ces exemples on utilise un mélange de polysilazanes composé de 1,325 g d'ammonolysat de $CH_3HSiCl_2$ préparé à l'exemple 1 et de 4,325 g de coammonolysat de $CH_3SiCl_3$, $(CH_3)_2SiCl_2$ et $(CH_3)CH_2{=}CHSiCl_2$ (dans un rapport molaire 0,50—0,25—0,25) préparé à l'exemple 4, ce qui correspond à un rapport

$$\frac{SiH}{SiVi}=1,46$$

Le mélange d'ammonolysats de faible viscosité (100 mPa · s) et le catalyseur sont introduits dans un réacteur capable de supporter une pression de 10 bars. Celui-ci est fermé hermétiquement puis porté en étuve à la température désirée. Les résultats obtenus sont portés dans le tableau I ci-après.

TABLEAU I

| Exemple | Catalyseur | Teneur en métal ppm | T en °C | Durée heures | Aspect à 20°C | TGA % |
|---|---|---|---|---|---|---|
| 6 | $RhCl(P\phi_3)_3$* | 100 | 170 | 24 | solide | 84 |
| 7 | Pt°** | 100 | 170 | 24 | solide | 86,5 |
| 8 | Pt°** | 100 | 170 | 15 | Gomme | 73,5 |
| 9 | Pt°** | 100 | 170 | 6 | Gomme | 69 |
| 10 | Pt°** | 100 | 190 | 6 | Gomme | 75 |

*$\phi=C_6H_5$

**complexe de Pt° et divinyl - 1,3 - tétraméthyldisiloxane tel que préparé à l'exemple 1 du brevet américain US—A 3.775.452.

Exemples 11 à 13 et 13a, 13b, 13c

Suivant le même mode opératoire que celui utilisé pour les exemples 6 à 10, on étudie la réticulation de différents mélanges d'ammonolysats composés à partir de:

—l'ammonolysat 1 de $CH_3HSiCl_2$ préparé à l'exemple 1

—l'ammonolysat 2 de $CH_3(CH_2{=}CH)SiCl_2$ préparé à l'exemple 2

—le coammonolysat 3 de $CH_3SiCl_3(CH_3)_2SiCl_2$ et $CH_3HSiCl_2$ préparé à l'exemple 3

—le coammonolysat 4 de $CH_3SiCl_3$, $(CH_3)_2SiCl_2$ et $CH_3(CH_2{=}CH)SiCl_2$ préparé à l'exemple 4 suivant des quantités adaptées à l'obtention d'un rapport $SiH/SiCh{=}CH_2$ désiré

Les résultats sont rassemblés dans le tableau II ci-dessous:

TABLEAU II

| Ex. | Composition du mélange | SiH/ $SiCH=CH_2$ | Catalyseur | Teneur en métal ppm | T °C | Durée h | Aspect à 20°C | TGA % |
|---|---|---|---|---|---|---|---|---|
| 11 | 1+2 | 1,46 | Pt°** | 100 | 170 | 20 | Solide | 85 |
| 12 | 2+3 | 1,46 | Pt°** | 100 | 170 | 20 | Solide | 86 |
| 13 | 3+4 | 1,50 | Pt°** | 100 | 170 | 20 | Solide | 86 |
| 13a | 3+4 | 1,50 | $PdCl_2$COD*** | 100 | 170 | 24 | liquide visqueux | 56 |
| 13b | 3+4 | 1,50 | $Ru(OAC)_2$ $(P\phi_4)_2$* | 100 | 170 | 24 | Solide | 64 |
| 13c | 3+4 | 1,50 | $(RhClCOD)_2$ *** | 100 | 170 | 24 | Solide | 72 |

φ* $C_6H_5$
Pt°** voir tableau I
COD*** cyclooctadiène-1,5

Exemple 14 et Exemples Comparatifs 14a et 14b

On utilise le seul coammonolysat de $CH_3SiCl_3$, $(CH_3)_2SiCl_2$, $CH_3HSiCl_2$, $CH(CH_2{=}CH)SiCl_2$ (dans un rapport molaire respectivement 0,45—0,25—0,20—0,10) préparé à l'exemple 5, ce qui permet de simplifier les manipulations à effectuer pour provoquer la réticulation. Etant donné que le même produit contient les fonctions SiH et $SiCH{=}CH_2$ il suffit donc d'ajouter le catalyseur.

Dans l'exemple comparatif 14a on a mesuré la TGA du produit initial et dans l'exemple comparatif 14b, on fait les mêmes opérations que dans l'exemple 14, sauf que l'on n'ajoute pas de catalyseur.

Les résultats sont rassemblés dans le tableau III ci-après.

TABLEAU III

| Exemples | Catalyseur | Teneur en métal ppm | T en °C | Durée en heures | Aspect à 20°C | TGA % |
|---|---|---|---|---|---|---|
| 14 | Pt°** | 100 | 170 | 20 | Solide | 80 |
| 14a | | | | | liquide | 34 |
| 14b | 0 | 0 | 170 | 20 | gomme | 53 |

Pt°** voir tableau I

Exemple 15

Dans cet exemple on utilise un mélange de deux coammonolysats de l'exemple 3 comportant des motifs ≡Si—H (0,37% d'H en poids) et de l'exemple 4, comportant des motifs $\equiv Si{-}CH{=}CH_2$ (un radical $CH{=}CH_2$ pour 4 silicium).

Les produits des exemples 3 et 4 sont mis en solution à 20% en poids dans le toluène. La solution de l'exemple 4 contient le catalyseur Pt°** en quantité calculée de façon à ce que, après mélange de 0,6 g de solution de produit de l'exemple 3 et 0,4 g de solution de produit de l'exemple 4, le taux de Pt° soit de 100 ppm ramené à la totalité des espèces silazanes présentes, et dans ce mélange le rapport SiH/SiVi est égal à 1,46. Après mélange des deux solutions à froid, on imprègne une tresse de fibres de verre pour évaluer l'acquisition des propriétés mécaniques du réticulat.

I—Analyse des propriétés mécaniques

On utilise pour ce faire un pendule de torsion à fibres.

Principe de la mesure: on imprègne une tresse de fibres de verre (environ 3000 fibres) avec la solution de polysilazanes préparée ci-dessus, additionnée du catalyseur. Après évaporation et séchage sous vide du composite ($T<50°C$) on mesure la période et l'amplitude des oscillations du pendule en fonction de la

température ou du temps selon la méthode décrite par B. Hartmann et G. F. Lee "Journal of Applied Polymer Sciences"—21 (1977) p. 1341.

La période p est reliée à la rigidité relative (RR) de l'échantillon

$$(RR=\frac{1}{p2})$$

elle-même proportionnelle au module élastique

$$G'=\frac{8\pi\ L\ I}{4}.$$

RR (L, r et I étant la longueur, le rayon et le moment d'inertie de l'échantillon).

L'amplitude des oscillations fournit la courbe d'amortissement et la variation en fonction de la température du module de perte (Δ):

$$\Delta=\frac{1}{n}\log\frac{Ar}{A_{r+n}}$$

Ar=amplitude du pic de référence et $A_{r+n}$=amplitude du pic après n cycles.

L'analyse comporte trois phases successives une fois la fibre imprégnée par le mélange de polysilazanes comportant le catalyseur et séchée sous vide.

Première montée en température de −160 à 180°C (température ultérieure de réticulation) avec un Δt d'environ 1,5°C/min. (a)

Réticulation de la résine en isotherme à 180°C durant 12 h.

Refroidissement lent à −160°C et deuxième montée en température jusqu'à 400°C avec Δt−1,5°C/min. (b)

Sur la figure 1 du dessin annexé est représentée la variation de la rigidité relative RR de l'échantillon, lors du premier passage courbe (a) et lors du 2ème passage courbe (b). La courbe (c) est la courbe obtenue avec les fibres seules sans polysilazanes.

Lors du premier passage en enregistre une Tg (température de transition vitreuse du produit) nette à −8°C. Ceci montre l'existence d'un mélange intime des deux polysilazanes. La rigidité de la fibre augmente à partir de $TR_1$=160°C indiquant nettement le début de la réticulation entre les espèces ≡SiH et les espèces ≡SiVi.

Le produit est réticulé 12 H à 180°C. Le tableau IV donne les valeurs de RR=rigidité relative du composite moins la rigidité relative des fibres nues, en fonction du temps de réticulation à une température de 180°C.

Après réticulation la courbe (b) de la figure 1 indique nettement le gain de rigidité du composite sur une large gamme de température. On notera également qu'une deuxième réticulation apparait à $TR_2$=260°C. Cette deuxième réticulation est due à une redistribution des liaisons ≡Si—NH du système, accompagnée d'un dégagement de $NH_3$ et est propre à la réticulation thermique de tout polysilazane.

TABLEAU IV

| Durée en mn | 0(1) | 0(2) | 10 | 60 | 100 | 140 | 180 | 220 | 300 | 400 | 500 | 600 | 700 |
|---|---|---|---|---|---|---|---|---|---|---|---|---|---|
| ΔRR $\times 10^2$ | 0,3 | 0,8 | 1,1 | 1,7 | 2,1 | 2,45 | 2,8 | 3,15 | 3,6 | 3,9 | 4,2 | 4,45 | 4,7 |

0(1)=ΔRR à 160°C avant réticulation.

0(2)=ΔRR à 180°C après montée dynamique de 160 à 180°C (environ 15 mn).

Exemple 16 et Exemple Comparatif 16a

Dans cet exemple on utilise un mélange de deux coammonolysats de l'exemple 3 comportant des motifs ≡SiH (0,37% d'H en poids) et de l'exemple 2, comportant des motifs ≡SiCH≡$CH_2$ (un CH=$CH_2$ par silicium) de telle sorte que le rapport SiH/SiVi=1,47.

Pour l'exemple 16 on opère comme dans l'exemple 15. Pour l'exemple comparatif 16a on opère de la même façon que dans l'exemple 15, sauf que l'on n'introduit pas de platine.

La figure 2 du dessin annexée représente l'analyse au pendule de torsion à fibres de l'exemple 16. Les résultats de l'exemple 16 sont tout à fait similaires à ceux de l'exemple 15. Le tableau V indique la cinétique d'acquisition des propriétés mécaniques du réticulat des exemples 16 et 16a.

TABLEAU V

| Ex. | Durée | 0(1) | 0(2) | 10 | 60 | 100 | 140 | 180 | 220 | 300 | 400 | 500 | 600 | 700 | 1200 |
|---|---|---|---|---|---|---|---|---|---|---|---|---|---|---|---|
| 16 | ΔRR $\times 10^2$ | 0,1 | 0,65 | 1,05 | 1,9 | 2,5 | 3,0 | 3,4 | 3,8 | 4,2 | 4,8 | 5,2 | 5,5 | 5,8 | — |
| 16a | ΔRR $\times 10^2$ | 0,15 | 0,2 | 0,35 | 1,05 | 1,6 | 2,0 | 2,35 | 2,65 | 3,1 | 3,6 | 3,8 | 4,0 | 4,2 | 4,8 |

0(1)=ΔRR à 160°C avant réticulation.
0(2)=ΔRR à 180°C après montée dynamique de 160 à 180°C (15 mn).

Exemple 17

On effectue la réticulation du mélange d'ammonolysats des exemples 6 à 10.

Cette réticulation est très fortement accélérée par l'addition d'azobisisobutyronitrile (AIBN) au système catalytique à base de platine. Les résultats sont rassemblés dans le tableau VI ci-après.

TABLEAU VI

| Ex. | Catalyseur | Concentration en catalyseur | T en °C | Durée h | Aspect à 20°C | TGA % |
|---|---|---|---|---|---|---|
| 9 | Pt°** | 100 ppm de Pt | 170 | 6 | liquide très visqueux | 69 |
| 17 | Pt°** +AIBN | 100 ppm de Pt 164 g · $kg^{-1}$a | 170 | 1/3 | gomme | 77 |

Exemple 18

On utilise les mêmes polysilazanes qu'aux exemples 6 à 10, sauf que l'AIBN est ajouté après 6 heures de réaction avec le platine.

Les résultats sont rassemblés dans le tableau VII ci-après:

TABLEAU VII

| Ex. | Catalyseur | Concentration en catalyseur | T en °C | Durée h | Aspect à 20°C | TGA % |
|---|---|---|---|---|---|---|
| 9 | Pt°** | 100 ppm de Pt | 170 | 6 | liquide visqueux | 69 |
| 18 | Pt°** +AIBN | 100 ppm de Pt 164 g · $kg^{-1}$a | 170 | 6+ 1/12 | solide | 75 |

Pt°**: Voir tableau I

Exemple 19

Dans cet exemple on mélange à l'air l'ammonolysat 1 de l'exemple 1 avec le coammonolysat 4 de l'exemple 4, en quantité telle que l'on ait un rapport SiH/SiCH=$CH_2$ de 1,5. On ajoute 100 ppm (métal) du catalyseur au platine Pt° identique à celui mentionné au tableau VII ci-dessus. On effectue la réticulation pendant 24 h à 170°C à l'air libre. On obtient un solide dont la pyrolyse indique un rendement TGA de 82%.

**Revendications**

1. Composition polysilazane pouvant réticuler à température ambiante ou sous l'effect de la chaleur ou d'un rayonnement, caractérisée en ce qu'elle comporte:

—au moins un polysilazane (1) contenant au moins 3 groupes ≡SiH par molécule, et au moins 2 groupes $SiR_2$ par molécule, $R_2$ étant un radical hydrocarboné à insaturation alcénique ou alcynique et une quantité catalytiquement efficace d'un métal ou d'un composé métallique catalysant la réaction d'hydrosilylation ≡SiH/≡$SiR_2$.

2. Composition polysilazane selon la revendication 1, caractérisée en ce que le polysilazane (1) présente par molécule au moins 3 motifs choisis parmi les motifs de formules:

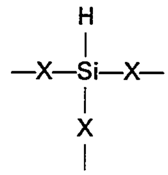 (Ia) 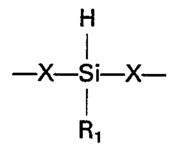 (Ib) 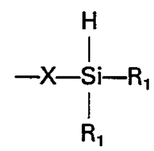 (Ic)

dans lesquelles les radicaux $R_1$, identiques ou différents, sont choisis parmi un atome d'hydrogène, un radical hydrocarboné saturé, et un radical aryle, alkylaryle ou arylalkyle, les symboles X, identiques ou différents, représentent les chaînons $(CH_2)_n$, n étant un nombre entier compris entre 1 et 8 inclus, —Si— et N—, au moins 50% des X étant N—, et au moins 2 motifs choisis parmi les motifs de formules:

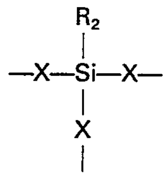 (IIa) 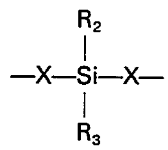 (IIb) 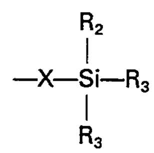 (IIc)

dans lesquelles $R_2$ représente un radical hydrocarboné à insaturation alcénique ou alcynique et les radicaux, identiques ou différents, $R_3$ sont choisis parmi un radical $R_1$, $R_2$ et $R_3$ étant différent de l'atome d'hydrogène, et X ayant la signification donnée ci-dessus.

3. Composition selon la revendication 1 ou 2, caractérisée en ce qu'à la place ou en plus du polysilazane (1) on utilise:

—au moins un polysilazane (2) présentant par molécule au moins 3 motifs choisis parmi les motifs de formules (Ia), (Ib) et (Ic),

—au moins un polysilazane (3) présentant par molécule au moins 2 motifs choisis parmi les motifs de formules (IIa), (IIb) et (IIc).

4. Composition selon l'une quelconque des revendications précédentes, caractérisée en ce que le radical $R_1$ est choisi parmi l'atome d'hydrogène et le radical méthyle et phényle, $R_2$ est le radical vinyle et $R_3$, choisi parmi le radical méthyle et phényle.

5. Composition selon l'une quelconque des revendications précédentes, caractérisée en ce qu'elle comporte en outre des charges.

6. Composition selon l'une quelconque des revendications précédentes, caractérisée en ce qu'elle présente un rapport molaire $SiH/SiR_2$ compris entre 0,5 et 5, de préférence entre 0,8 et 2.

7. Composition selon l'une quelconque des revendications précédentes, caractérisée en ce qu'elle est utilisée sans solvant, les polysilazanes (1), (2) et (3) étant choisis de telle sorte que la viscosité de la composition à 25°C soit comprise entre 10 et 5 000 mPa · s, de préférence entre 100 et 1 000 mPa · s.

8. Composition selon l'une quelconque des revendications 1 à 6, utilisable pour filer des fibres, caractérisée en ce que les polysilazanes (1), (2) et (3) sont choisis de telle sorte que la viscosité soit supérieure à 5 000 mPa · s et en ce que la composition est à l'état fondu sans solvant ou en solution dans un solvant.

9. Composition selon l'une quelconque des revendications précédentes, caractérisée en ce que la teneur du catalyseur est comprise entre 1 et 400 ppm, de préférence entre 10 et 250 ppm calculés en poids de métal catalytique.

10. Composition selon l'une quelconque des revendications précédentes, caractérisée en ce que le métal catalytique appartient au groupe du platine.

11. Composition selon l'une quelconque des revendications précédentes, caractérisée en ce qu'elle comporte en outre un générateur de radicaux libres.

12. Composition selon la revendication 11, caractérisée en ce que le générateur de radicaux libres est l'azobisisobutyronitrile.

13. Procédé de réticulation d'une composition conforme à l'une quelconque des revendications précédentes, caractérisé en ce qu'on chauffe la composition sous vide ou sous pression ou sous atmosphère inerte ou à l'atmosphère ambiante à une température comprise entre 50 et 300°C, de préférence entre 100 et 200°C.

14. Procédé pour recouvrir ou imprégner un support d'un matériau céramique, caractérisé en ce que:

—on enduit ou on imprègne ledit support d'une composition conforme à l'une quelconque des revendications 1 à 12,

—on réticule la composition et,

—on pyrolyse le revêtement par un traitement thermique allant de la température de réticulation à une température de 1 500—2 000°C.

15. Utilisation d'une composition telle que définie à l'une quelconque des revendications 1 à 12, pour

l'obtention de matériaux céramiques, par pyrolyse de la composition à une température allant de la température de réticulation de la composition à une température de 1 500—2 000°C.

**Patentansprüche**

1. Bei Raumtemperatur oder unter Einwirkung von Wärme oder Bestrahlung vernetzbare Polysilazan - Zusammensetzung, dadurch gekennzeichnet, daß sie umfaßt:

—wenigstens ein Polysilazan (1), das wenigstens drei ≡SiH-Gruppen pro Molekül enthält und wenigstens 2 $SiR_2$-Gruppen pro Molekül, wobei $R_2$ ein Kohlenwasserstoffrest mit alkenischer oder alkinischer ungesättigter Bindung ist und eine wirksame katalytische Menge eines Metalls oder einer Metallverbindung, das (die) die Hydrosilylierungsreaktion $\equiv SiH/\equiv SiR_2$ katalysiert.

2. Polysilazan - Zusammensetzung nach Anspruch 1, dadurch gekennzeichnet, daß das Polysilazan (1) pro Molekül wenigstens 3 Baugruppen aufweist, die ausgewählt werden aus den Baugruppen der Formeln:

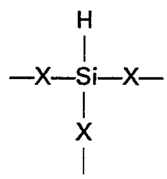 (Ia) 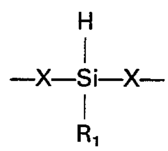 (Ib) 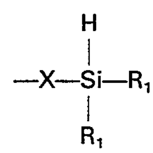 (Ic)

in denen die Reste $R_1$ identisch oder verschieden sind und ausgewählt werden aus einem Wasserstoffatom, einem gesättigten Kohlenwasserstoffrest, einem Arylrest, Alkylaryl- oder Arylalkylrest, wobei die Reste X identisch oder verschieden sind und jeweils die Kettenabschnitte $(CH_2)_n$ darstellen, wobei n eine ganze Zahl zwischen 1 und einschließlich 8 ist, oder —Si— oder N— darstellen, wobei wenigstens 50% der Symbole X N— darstellt und wenigstens zwei Baugruppen ausgewählt werden aus den Baugruppen der Formeln:

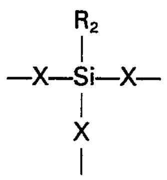 (IIa) 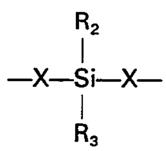 (IIb) 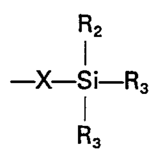 (IIc)

in denen $R_2$ einen Kohlenwasserstoffrest mit alkenischer oder alkinischer ungesättigter Bindung darstellen und die Reste $R_3$, die identisch oder verschieden sind, ausgewählt werden aus einem der Reste für $R_1$, $R_2$ wobei $R_3$ von einem Wasserstoffatom verschieden sind und X die oben angegebene Bedeutung hat.

3. Zusammensetzung nach Anspruch 1 oder 2, dadurch gekennzeichnet, daß man anstelle von oder zusätzlich zu dem Polysilazan (1) verwendet:

—wenigstens ein Polysilazan (2), das pro Molekül wenigstens drei Baugruppen ausgewählt aus den Baugruppen der Formeln (Ia), (Ib) und (Ic) aufweist,

—wenigstens ein Polysilazan (3), das pro Molekül wenigstens zwei Baugruppen ausgewählt aus den Baugruppen der Formel (IIa), (IIb) und (IIc) aufweist.

4. Zusammensetzung nach einem der vorhergehenden Ansprüche, dadurch gekennzeichnet, daß der Rest $R_1$ ausgewählt wird aus einem Wasserstoffatom und dem Methyl- oder Phenyrest, $R_2$ ein Vinylrest ist und $R_3$ ausgewählt wird aus den Resten Methyl und Phenyl.

5. Zusammensetzung nach einem der vorhergehenden Ansprüche, dadurch gekennzeichnet, daß sie außerdem Füllstoffe enthält.

6. Zusammensetzung nach einem der vorhergehenden Ansprüche, dadurch gekennzeichnet, daß sie ein molares Verhältnis $SiH/SiR_2$ von zwischen 0,5 und 5 und vorzugsweise zwischen 0,8 und 2 aufweist.

7. Zusammensetzung gemäß einem der vorhergehenden Ansprüche, dadurch gekennzeichnet, daß sie ohne Lösungsmittel verwendet wird, wobei die Polysilazane (1), (2) und (3) so ausgewählt werden, daß die Viskosität der Zusammensetzung bei 25°C zwischen 10 und 5000 mPas, vorzugsweise zwischen 100 und 1000 mPas liegt.

8. Zusammensetzung gemäß einem der Ansprüche 1 bis 6, verwendbar zum Spinnen von Fasern, dadurch gekennzeichnet, daß die Polysilazane (1), (2) und (3) so ausgewählt werden, daß die Viskosität oberhalb von 5000 mPas liegt und daß die Zusammensetzung sich im geschmolzenen Zustand ohne Lösungsmittel oder in Lösung in einem Lösungsmittel befindet.

9. Zusammensetzung nach einem der vorhergehenden Ansprüche, dadurch gekennzeichnet, daß der Gehalt an Katalysator zwischen 1 und 400 ppm, vorzugsweise zwischen 10 und 250 ppm, berechnet in Gewicht des katalytischen Metalls, beträgt.

10. Zusammensetzung nach einem der vorhergehenden Ansprüche, dadurch gekennzeichnet, daß das katalytische Metall zur Platingruppe gehört.

11. Zusammensetzung nach einem der vorhergehenden Ansprüche, dadurch gekennzeichnet, daß sie außerdem einen Erzeuger für freie Radikale enthält.

12. Zusammensetzung nach Anspruch 11, dadurch gekennzeichnet, daß der Erzeuger für freie Radikale Azobisisobutyronitril ist.

13. Verfahren zur Vernetzung einer Zusammensetzung gemäß einem der vorhergehenden Ansprüche, dadurch gekennzeichnet, daß man die Zusammensetzung im Vakuum oder unter Druck oder unter Inertatmosphäre oder an der Umgebungsluft auf eine Temperatur zwischen 50 und 300°C, vorzugsweise zwischen 100 und 200°C erwärmt.

14. Verfahren zum Überziehen oder Imprägnieren eines Trägers mit einem keramischen Stoff, dadurch gekennzeichnet, daß:

—man diesen Träger mit einer Zusammensetzung gemäß einem der Ansprüche 1 bis 12 beschichtet oder imprägniert,

—man die Zusammensetzung vernetzt und

—man den Überzug durch eine thermische Behandlung, die von der Vernetzungstemperatur bis zu einer Temperatur von 1500 bis 2000°C geht, pyrolisiert.

15. Verwendung einer Zusammensetzung gemäß der Definition eines der Ansprüche 1 bis 12, zur Herstellung von keramischen Materialien, durch Pyrolyse der Zusammensetzung bei einer Temperatur, die von der Vernetzungstemperatur der Zusammensetzung bis zu einer Temperatur von 1500 bis 2000°C reicht.

**Claims**

1. A polysilazane composition which is cross-linkable at ambient temperature or under the effect of heat or a radiation characterised in that it comprises:

—at least one polysilazane (1) containing at least 3 groups ≡SiH per molecule and at least 2 groups $SiR_2$ per molecule, $R_2$ being a hydrocarbon radical with alkenic or alkynic unsaturation and a catalytically effective amount of a metal or a metallic compound catalysing the hydrosilylation reaction $=SiH=SiR_2$.

2. A polysilazane composition according to claim 1 characterised in that the polysilazane (1) has per molecule at least 3 units selected from units of the following formulae:

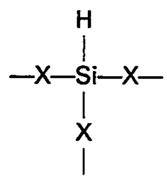 (Ia) 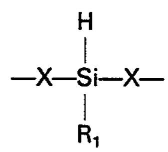 (Ib) 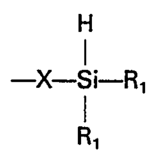 (Ic)

wherein the radicals $R_1$ which are identical or different are selected from a hydrogen atom, a saturated hydrocarbon radical and an aryl, alkylaryl or arylalkyl radical, the symbols X which are identical or different represent the groups $(CH_2)_n$, n being an integer of between 1 and 8 inclusive, —Si— and N—, at least 50% of the X being N—, and at least 2 units selected from units having the following formulae:

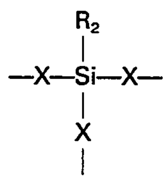 (IIa) 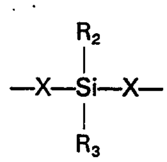 (IIb) 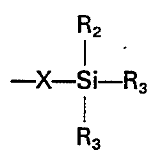 (IIc)

wherein $R_2$ represents a hydrocarbon radical with alkenic or alkynic unsaturation and the radicals $R_3$ which are identical or different are selected from a radical $R_1$, $R_2$ and $R_3$ being different from a hydrogen atom, and X being as identified above.

3. A composition according to claim 1 or claim 2 characterized by using in place of or in addition to the polysilazane (1):

—at least one polysilazane (2) which has per molecule at least 3 units selected from the units of formulae (Ia), (Ib) and (Ic),

—at least one polysilazane (3) which has per molecule at least 2 units selected from the units of formulae (IIa), (IIb) and (IIc).

4. A composition according to any one of the preceding claims characterised in that the radical $R_1$ is selected from a hydrogen atom and the methyl and phenyl radicals, $R_2$ is the vinyl radical and $R_3$ is selected from the methyl and phenyl radicals.

5. A composition according to any one of the preceding claims characterised in that it further comprises fillers.

6. A composition according to any one of the preceding claims characterised in that it has an $SiH/SiR_2$ molar ratio of between 0.5 and 5 and preferably between 0.8 and 2.

7. A composition according to any one of the preceding claims characterised in that it is used without a solvent, the polysilazanes (1), (2) and (3) being so selected that the viscosity of the composition at 25°C is between 10 and 5000 mPa · s, preferably between 100 and 1000 mPa · s.

8. A composition according to any one of claims 1 to 6 which can be used for extruding fibres characterised in that the polysilazanes (1), (2) and (3) are so selected that the viscosity is higher than 5000 mPa · s and that the composition is in the molten state without solvent or in solution in a solvent.

9. A composition according to any one of the preceding claims characterised in that the amount of catalyst is between 1 and 400 ppm, preferably between 10 and 250 ppm calculated by weight of catalytic metal.

10. A composition according to any one of the preceding claims characterised in that the catalytic metal belongs to the platinum group.

11. A composition according to any one of the preceding claims characterised in that it further comprises a free radical generator.

12. A composition according to claim 11 characterised in that the free radical generator is azobisisobutyronitrile.

13. A process for cross-linking a composition according to any one of the preceding claims characterised by heating the composition under vacuum or under pressure or in an inert atmosphere or in the ambient atmosphere at a temperature of between 50 and 300°C, preferably between 100 and 200°C.

14. A process for covering or impregnating a support with a ceramic material characterised by:

—coating or impregnating said support with a composition according to any one of claims 1 to 12,

—cross-linking the composition and

—pyrolysing the coating by means of a heat treatment going from the cross-linking temperature to a temperature of 1500—2000°C.

15. Use of a composition as set forth in any one of claims 1 to 12 for the production of ceramic materials by pyrolysis of the composition at a temperature ranging from the composition cross-linking temperature to a temperature of 1500—2000°C.

FIG. 1

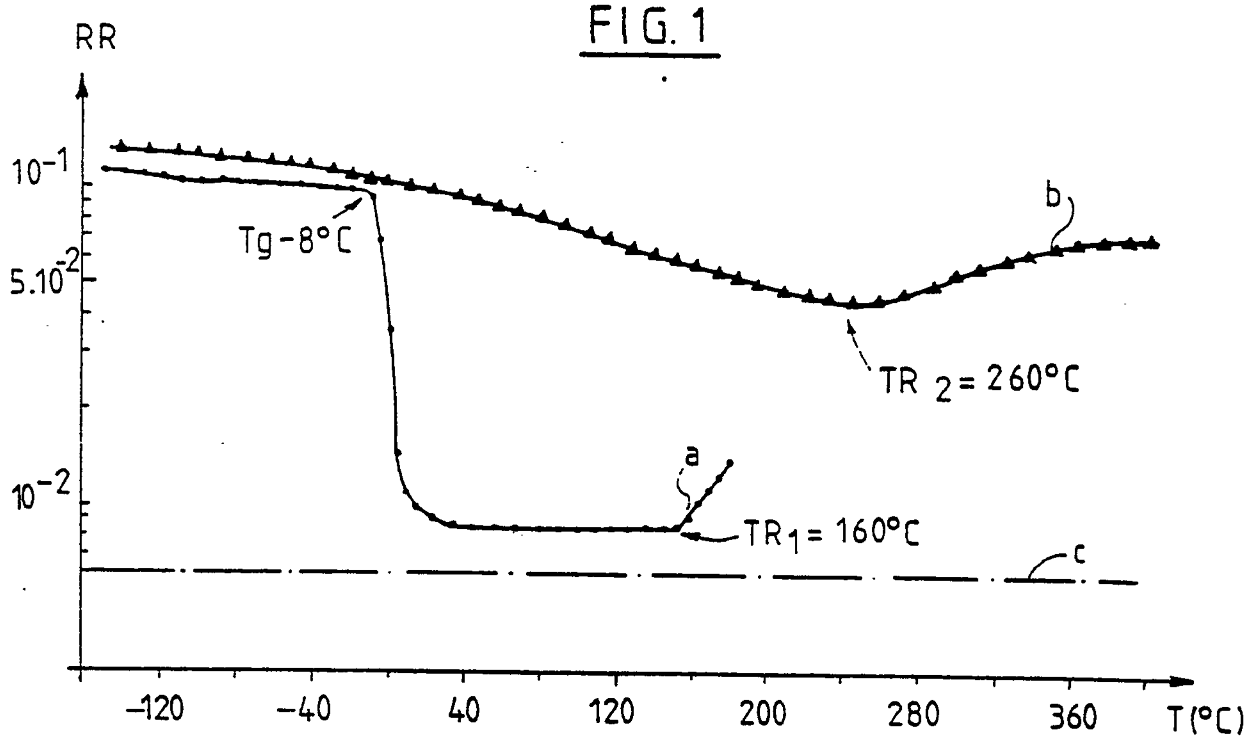
RR
$10^{-1}$
$5.10^{-2}$
$10^{-2}$
Tg -8°C
b
TR 2 = 260°C
a
TR1 = 160°C
c
-120
-40
40
120
200
280
360
T(°C)

FIG. 2

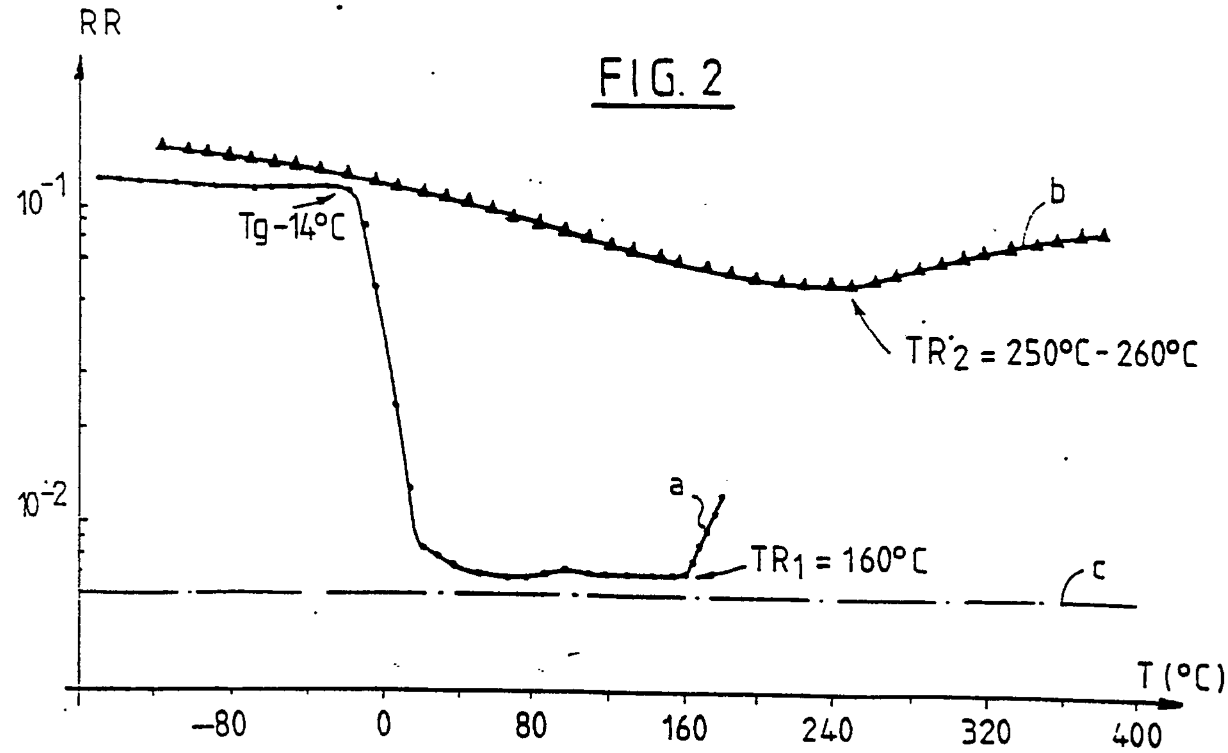
RR
$10^{-1}$
$10^{-2}$
Tg -14°C
b
TR'2 = 250°C - 260°C
a
TR1 = 160°C
c
T (°C)
-80
0
80
160
240
320
400